# EUROPEAN PATENT SPECIFICATION

(11) **EP 0 639 056 B1**
(45) Date of publication and mention of the grant of the patent: **19.11.1997**
(21) Application number: 93911920.2
(22) Date of filing: 06.05.1993
(51) Int. Cl.: A23L 1/0522, A23L 1/187

(54) **STARCH-THICKENED FOODSTUFF AND PROCESS FOR PREPARING IT**
MIT STAERKE ANGEDICKTES LEBENSMITTEL UND VERFAHREN TU SEINER HERSTELLUNG
PRODUIT ALIMENTAIRE EPAISSI PAR DE L'AMIDON, ET PROCESSUS DE PREPARATION

(30) Priority: 08.05.1992 GB 9209997
(43) Date of publication of application: 22.02.1995
(73) Proprietor: UNILEVER PLC, London EC4P 4BQ (GB); UNILEVER N.V., 3013 AL Rotterdam (NL)
(72) Inventor: CARTER, Jeremy, Brian, Horsfall, Bedford MK41 8BD (GB); BROWN, Joanne, Mary 158 Rushden Road, Nr Rushden Northampton NN10 9LE (GB); HODGES, Rosalind, Clare, Goldington Bedford MK41 0SN (GB)
(74) Representative: Eke, Philippa Dianne
(86) International application number: GB9300931
(87) International publication number: WO9322938

(56) References cited:
- EP-A- 0 144 453
- EP-A- 0 216 503
- FR-A- 2 661 317
- GB-A- 2 203 160
- GB-A- 2 225 697
- US-A- 2 442 658
- US-A- 2 653 876

## Description

### FIELD OF THE INVENTION

The present invention relates to starch-thickened food-stuffs with improved freeze-reheat stability and having a smooth texture with low or negligible sliminess comprising a starch component and an amylopectin component, and a process for preparation thereof.

### BACKGROUND TO THE INVENTION

Starches are widely used in food applications as thickeners or bodying agents of starch-thickened foods. By "starch-thickened foods" are understood, throughout this specification and the attached claims, any fluid, pasty or semi-solid food product in which a, preferably native, starch-based thickening agent is used to impart a degree of thickening. Examples of such foods include sauces, soups, gravies, creams, and the like.

Starch consists of granules which have ordered structures which are semi-crystalline and birefringent. Chemically, starches mainly consist of two types of polysaccharides, amylose and amylopectin. Amylose is an essentially linear 1-4-linked alpha-D-glucose and amylopectin is a highly branched macromolecule consisting of short chains of 1-4-linked alpha-D-glucose with 1-6-linked branches.

When starch granules are heated in water at a specific temperature (the gelatinization temperature, usually about 55°C to 70°C), the granules swell irreversibly and the amylose is preferentially solubilized. During this gelatinization, the granule birefringence and crystallinity disappear and a viscous solubilized paste is formed. The swollen starch granules, upon cooling to room temperature, show a strong tendency to associate with each another through hydrogen-bonding between hydroxyl groups. This phenomenon is called retrogradation. In dilute starch solutions the amylose slowly aligns itself in parallel fashion to give insoluble bundles, which render the solution opaque and may cause precipitates. In more concentrated solutions (about 5% by weight and higher) the amylose molecules associate in random fashion and give a reticulated network of a gel.

If the starch gel is frozen, the freezing causes the separation of discrete ice crystals and this water does not reconstitute uniformly when the system is thawed. As a consequence, the starch paste loses its water-retention capacity and a watery phase is separated by syneresis.

If an appreciable level of native starch (containing amylose) is used in the food product, the product may lose its smooth creamy consistency upon freezing and become lumpy or curdled in texture and reheating will usually not restore the original appearance of the product. The effect is even worse when the product is subjected to a number of freeze-thaw cycles. While the effect is less pronounced in non-frozen systems, the product may also become gelled/lumpy when stored under chill or ambient conditions, even without freezing - a phenomenon that is sometimes described as "set-back" in a sauce; once this happens the gel will not melt on reheating.

The so-called waxy starches, which essentially consist of amylopectins, and their physically and/or enzymatically modified derivatives, associate only with difficulty because of their branched nature. They crystallise very slowly and if any precipitate is formed, it can easily be re-dispersed by heating it in water above about 50°C. The problem is, however, that if these waxy starches are used at a relatively high level in food products to prevent syneresis from occurring upon re-heating after freezing, an unacceptable slimy or slippery texture is obtained. Some chemically modified waxy starches may also demonstrate this problem.

Therefore on the one hand, food products containing native, amylose containing starches, do not have freeze-reheat stability and, on the other hand, if attempts are made to improve the freeze-reheat stability by using mainly amylopectin-based starches (waxy starches), an unacceptable texture is obtained.

### LITERATURE

In Food Technology, October 1951, pages 432-440, the preparation of stable frozen sauces and gravies has been described. In this article, it has been stated that homogenization of the already prepared sauce would improve its freeze stability and indeed homogenization of the standard white sauce (prepared with an all-purpose flour) eliminated liquid separation from unfrozen sauces. It also caused a slight decrease in the amount of liquid separation that appeared after freezing and after storage at -18°C (0°F), but there was no statistically significant difference in the appearance of the thawed sauces. From this publication it is clear that up till now homogenization has not produced any improvement in freeze-thaw stability of starch-thickened foodstuffs.

It is known that an amylopectin component can be manufactured from waxy starches by dissolution in a solvent, for example, dimethyl sulphoxide. However, such a chemically produced amylopectin component is not suitable for use in foodstuffs.

US 2442658 discloses a starch stabiliser comprising a mixture of pregelatinised and non-gelatinised starch, milled together in a dry condition. The starches are waxy starches or tapioca, potato or corn starches.

GB 2225697 discloses a dry food mix comprising an uncooked starch and a spray-dried pregelatinised starch.

FR 2661317 relates to a starch-based food product having, as a fat substitute, 80-90% by weight granules of starch encapsulated within a continuous matrix of 10-20% by weight amorphous starch. The product is prepared by differential cooking of native starch granules. A significant fraction of the product remains in the form of insoluble particles even after intensive thermal and mechanical treatment.

EP 0216503 discloses a cold water swelling starch composition comprising a heat-processed blend of an essentially amylose-free starch and a starch containing more than 20% amylose.

GB 2203160 teaches that a plant having a dull waxy homozygous genotype will produce a starch having properties comparable to chemically modified starch. A slurry of starch and water is cooked and subjected to shear to form a paste, which is used to prepare a thickened foodstuff.

EP 0144453 teaches a thickener composition comprising water and a waxy starch from a plant of a wzsu2 (homozygous) genotype. The sol of this starch exhibits superior resistance to breakdown on storage at low temperatures.

### SUMMARY OF THE INVENTION

We have now found that a suitable amylopectin component can be manufactured by subjecting the amylopectin component's source to shear forces. This component is suitable for use in foodstuffs and is obtained using only physical processes.

Furthermore, we have found that starch-thickened foodstuffs having a surprisingly smooth and good texture after reheating following ambient, and particularly following frozen storage, can be obtained by using a mixture of native starch component and the amylopectin component within the foodstuff. Within such liquid foodstuffs the amylopectin component constitutes the continuous phase. The foodstuffs are particularly suitable for freezing and reheating, because in this environment lumpiness is more likely to occur. The invention is applicable to heated systems and is not restricted to systems which have been frozen. It is also applicable to systems which have not been frozen, eg those which have been sterilised.

The reheated starch-thickened foodstuffs of the invention retain their good textural properties, ie absence of lumpiness/ sliminess and freeze-reheat stability, after dilution or drying. The sheared amylopectin component is also effective after dilution or drying.

The present invention therefore relates to a starch-thickened foodstuff having improved freeze-reheat stability and good texture comprising a gelatinised native starch component and an amylopectin component, wherein the amylopectin component is obtainable by;
(a) cooking the amylopectin component source, in the absence of the native starch component, to obtain a gel;
(b) shearing the cooked amylopectin component source.

### GENERAL DESCRIPTION OF THE INVENTION

The source amylopectin component of the starch-thickened foodstuff is preferably a so-called waxy starch for example, waxy cereal starches, such as waxy maize starch, and waxy rice starch; waxy tuber starches; waxy fruit and legume starches; waxy root starches; mutant waxy starches; hybrid waxy starches; modified waxy starches (chemically and/or physically and/or enzymatically modified waxy starches. Examples of such starches are heat-moisture-treated starches, starches which have been reacted with a monofunctional reagent to introduce substituents such as phosphate, adipate, acetate, hydroxyalkyl or succinate groups) and mixtures thereof. The source amylopectin component can also be cereal or root starches, such as wheat or potato, from which the amylose has been separated or otherwise rendered unavailable to interact with the native starch component that is used to thicken the foodstuff.

The preferred waxy starches are waxy cereal starches, waxy root starches, mutant waxy starches and mixtures thereof. Even more preferred waxy starches are cereal starches such as waxy maize starch and waxy rice starch and mixtures thereof. The amylopectin component can give the benefit at a level of 1% dependent on the system, but usually a level of at least 2% by weight is required.

The native starch component of the starch-thickened foodstuff is any native starch for example, corn or maize starch, tapioca starch, wheat starch, rice starch, barley starch, pea starch, grain sorghum starch, potato starch and mixtures thereof, or a material comprising native starch, such as flour. This component will usually be present at a level up to about 10% by weight, ie comparable to commercial levels. Higher levels are usable dependent on the system and the properties desired.

Subjecting the cooked amylopectin component gel to shear forces (step (b)) is preferably effected by homogenization of said gel, but also high-shear intensive mechanical mixing may be applied, such as milling in, for example, a colloid mill.

Examples of the starch-thickened foodstuffs according to the present invention are gravies, soups, sauces, dessert preparations, puddings, and the like.

Accordingly, the starch-thickened foodstuffs according to the present invention may further comprise one or more components selected from fats; fat substitutes or replacers; animal protein; vegetable protein; fungal protein; vegetables; herbs; spices; dairy material; egg material; acidifying agents; emulsifiers; flavouring agents; flavouring precursors; sweetening agents; colouring agents; salt; minerals; vitamins; antioxidants; stabilizers, and mixtures thereof.

The fat (which includes oils) may be of vegetable or animal origin and may be a synthetic fat. It may be a single fat or fat fraction or a mixture of fats and/or fat fractions. At least part of the fat may be replaced by a low-calorie fat substitute or fat replacer. Particularly suitable fat replacers are the edible polyesters of polyhydric alcohols having at least four free hydroxyl groups, such as polyglycerols, sugars or sugar alcohols, and saturated or unsaturated, straight or branched alkyl chain C₈-C₂₄ fatty acids. The polyhydric alcohol fatty acid polyesters include any such polyesters or their mixtures of which an average of at least 70% of the polyhydric alcohol hydroxyl groups have been esterified with the fatty acids. Fatty alkyl ether derivatives of glycerol, esters of C₈-C₂₄ fatty alcohols and polycarboxylic acids, waxes and microcrystalline cellulose can also be used for replacing or substituting at least part of the fat.

The animal protein may be the meat of mammals (such as beef, pork, lamb meat), poultry (such as chicken and turkey) and fish. Mixtures of meat may also be used.

The vegetable protein may be soybean protein; the fungal protein can be myco-protein. Vegetables such as red peppers, onion may be used. The dairy material may be cheese or yoghurt. The acidifying agents or acidulants may be innocuous acids such as acetic acid, citric acid, malic acid, vinegar or lemon juice. The stabilizers may be hydrocolloids and gums.

The emulsifiers are preferably selected from alkali metal or hydrogen C₁₂-C₂₄ fatty acid acyl lactylates, such as sodium stearoyl-2-lactylate; monoglycerides of, preferably saturated, C₁₂-C₂₄ fatty acids, such as glycerol monostearate; diacetyl tartaric acid esters of mono- and/or diglycerides of C₁₂-C₂₄ fatty acids; succinylated monoglycerides of C₁₂-C₂₄ fatty acids, and mixtures thereof.

### SPECIFIC DESCRIPTION OF THE INVENTION

Examples of the products and processes of the invention will now be described to illustrate but not limit the invention.

There are two possible processes for preparing the starch-thickened foodstuff according to the invention. Both processes involve initially obtaining the amylopectin component via steps (a) and (b) as described above, followed by two additional steps, these are as follows;

### Process 1

(c) combining the amylopectin component with the native starch component; and
(d) cooking the mixture thus obtained and cooling it.

This process is the preferred process for preparation of foodstuffs requiring a long cooking time.

### Process 2

(c) cooking the native starch component; and
(d) admixing with the amylopectin component.

This process is the preferred process for preparation of foodstuffs requiring a short overall cooking time.

### Example 1

2 parts Amioca (waxy maize starch ex National Starch) in 95.5 parts of water were cooked together in a saucepan for 15 minutes until the mix reached a temperature of 95°C and then held at that temperature for 5 minutes. The mix was then sheared to a thin liquid, using a Silverson L4R mixer with an emulsor screen at full power, ie 0.25 kw input and 6,000 to 8,000 revolutions per minute for about 5 minutes. 2.5 parts of Cornflour were then added to the sheared Amioca dispersion and the mix heated to 90°C in a bain marie and gently stirred for 5 minutes. The cooked mix was then poured into plastic sachets, cooled to -20°C and held frozen for 48 hours. The sachet was then reheated to 80°C in a pan of boiling water and examined.

The reheated dispersion was smooth and had no slimy appearance and texture.

### Comparative Example A

2.5 parts of Cornflour were heated for 5 minutes in 97.5 parts of water at 90°C in a bain marie with gentle stirring. The cooked starch was then poured into plastic sachets, cooled to -20°C and held frozen for 48 hours. The sachet was then reheated to 80°C in a pan of boiling water and examined.

The reheated dispersion was lumpy, containing small pieces of soft gel surrounded by a watery liquid.

### Comparative Example B

2.5 parts of Cornflour and 2 parts of Amioca (waxy maize starch ex National Starch) were heated in 95.5 parts of water to 90°C in a bain marie with gentle mixing and held at 90°C for 5 mins. The cooked mix was then poured into plastic sachets, cooled to -20°C and held frozen for 48 hours. The sachet was then reheated to 80°C in a pan of boiling water and examined.

The reheated dispersion was smooth but had a slimy appearance and texture not noticed in Example 1.

### Example 2

Example 1 was repeated except that this time the concentration of Cornflour was 5% and the concentration of Amioca (waxy maize starch ex National Starch) used was 4%.

After heating, freezing and eheating, the dispersion was smooth and without a slimy appearance and texture.

### Comparative Example C

Comparative Example A was repeated with 5% Cornflour. After heating, freezing and reheating, the dispersion had severely retrograded into large jelly-like lumps surrounded by a watery liquid.

### Comparative Example D

Comparative Example B was repeated with 5% Cornflour and 4% Amioca. After heating, freezing and reheating, the dispersion contained lumps and was surrounded by a slimy liquid.

### Example 3 and Comparative Examples E & F

Experiments were conducted in a gravy mix having the following composition:

| COMPOSITION (wt%) | EXAMPLE | | |
|---|---|---|---|
| | 3 | E | F |
| Cornflour | 2.5 | 4.5 | 2.5 |
| Amioca | - | - | 2.0 |
| Sheared Amioca | 2.0* | - | - |
| Onion Powder | 0.2 | 0.2 | 0.2 |
| Caramel | 0.4 | 0.4 | 0.4 |
| Salt | 0.2 | 0.2 | 0.2 |
| Flavours | 2.5 | 2.5 | 2.5 |
| Beef Fat | 1.0 | 1.0 | 1.0 |
| Water | to 100 | to 100 | to 100 |

| | | | |
|---|---|---|---|
| * added as 20 parts of 10% sheared amioca solution. | | | |

10% Sheared Amioca was prepared by heating 10 parts of Amioca in 90 parts of water to 95°C in a saucepan and then shearing the cooked Amioca to a thin liquid with the Silverson (for 5 - 10 mins) according to the method described in Example 1.

The powdered ingredients were added to the water (or to the sheared Amioca dispersion in Mix 3), heated in a pan with gentle stirring until they started to boil and the beef fat added. They were then cooled to 60°C, adjusted for any water loss, frozen and reheated according to the method described in Example 1.

After reheating, the gravy of Example 3 was smooth and had a good texture, typical of a freshly prepared gravy.

After reheating, the gravy of Example E was lumpy and had retrograded into large jelly-like lumps surrounded by a watery liquid.

After reheating, the gravy of Example F was smooth but slimy.

### Example 4 and Comparative Examples G & H

Experiments were conducted in a Cream Sauce mix having the following composition:

| COMPOSITION | EXAMPLE | | |
|---|---|---|---|
| | 4 | G | H |
| Wheatstarch | 3.0 | 3.0 | 3.0 |
| Amioca | - | - | 2.0 |
| 10% Sheared Amioca | 20.0 | - | - |
| Unsalted Butter | 3.8 | 3.8 | 3.8 |
| Cream (35% fat) | 35.9 | 35.9 | 35.9 |
| Flavours | 2.6 | 2.6 | 2.6 |
| Onion Powder | 0.03 | 0.03 | 0.03 |
| Reduced White wine* | 4.5 | 4.5 | 4.5 |
| Salt | 0.4 | 0.4 | 0.4 |
| Water | to 100 | to 100 | to 100 |

| | | | |
|---|---|---|---|
| *9 parts of white wine were reduced to half their original weight by boiling in a saucepan. 10% Sheared Amioca was prepared as in Example 3. The other starches were slurried in part of the water. The butter and the dry ingredients, excepting the starches, were combined with the rest of the water and warmed in a saucepan with gentle stirring until the fat had melted and the powders dispersed (at a temperature of 30 - 50°C). To this was added the reduced wine, the starch slurries - and the sheared Amioca in Example 4 - and the cream. The sauces were then heated for ca 10 mins with gentle stirring until they reached 95°C. The sauces were then cooled to 60°C, adjusted for any water loss, frozen and reheated according to the method described in Example 1. | | | |

### Example 4

After reheating the cream sauce was smooth and had a good creamy texture, typical of a freshly prepared Cream Sauce.

### Comparative Example G

After reheating, the sauce was lumpy with retrograded jelly-like lumps surrounded by a creamy liquid.

### Comparative Example H

After reheating, the sauce was smooth but slimy.

### Example 5 and Comparative Examples I & J

The gravies prepared in Example 3 were poured into cans, sealed and sterilised in a pressure cooker at 121°C for 30 mins. The samples were then cooled, held at room temperature for 48 hours and then reheated to 80°C in a saucepan of boiling water. The cans were then opened and the gravies examined.

### Example 5: Sterilised version of Example 3

After reheating the gravy was smooth and had a good texture, typical of a fresh gravy.

### Example I: Sterilised version of Example E

When the can was opened, the gravy appeared as a solid lump of jelly with a small amount of free liquid on the top.

### Example J: Sterilised version of Example F

After reheating the gravy was smooth but slimy.

### Example 6 and Comparative sample K

This demonstrates the effect of subsequent dilution of frozen reheated wheatstarch cooked in sheared Amioca. A concentrated cooked starch mix was prepared as follows; 10 parts of wheatstarch were mixed with 40 parts of 10% Sheared Amioca, prepared as in Example 3, and 50 parts of water and cooked to 90°C, frozen and reheated according to the method described in Example 1. The reheated mix was then diluted 4 times with water and refrozen.

The diluted mix, now containing 2.5% wheatstarch and 1% Sheared Amioca remained smooth on reheat.

### Comparative sample K

Comparative sample A was repeated with 10% wheatstarch in place of 2.5 parts Cornflour. After heating, freezing and reheating, the dispersion was a solid lump which could not satisfactorily be diluted since it would not readily disperse in added water.

### Example 7

This demonstrates the effect of drying wheat starch cooked in Sheared Amioca. A 10% wheatstarch cooked in 4% sheared Amioca was prepared and frozen, as described in Example 6. The frozen mix was then freeze dried and the material ground to a powder by passing through an Apex hammermill with a 3 mm screen at ca 3000 rpm.

7 parts of this dried precooked starch were dispersed in 93 parts of water to yield a typical starch thickened paste which retained its smoothness without being slimy even when refrozen and reheated according to the methods described in Example 1.

### Example 8

10 parts of Amioca in 90 parts of water were cooked and then sheared to a thin liquid according to the method described in Example 1. The mix was then freeze dried, ground to a powder through an Apex hammermill as described in Example 7. 5 parts of Cornflour were then cooked in 4 parts of the freeze dried powder reconstituted in 91 parts of water, frozen and reheated according to the method described in Example 1. After reheating, the dispersion was smooth and without a slimy appearance and texture, similar to Example 2.

### Example 9

10 parts of Amioca in 90 parts of water were cooked according to the method described in Example 1 and then sheared to a thin liquid by passing at 50 kilos/hour through a Crepaco piston homogeniser set at 200 Bar pressure. 5 parts of cornflour were then cooked with 40 parts of this 10% Sheared Amioca and 55 parts of water, frozen and reheated according to the method described in Example 1. After reheating the dispersion was smooth and without a slimy appearance and texture, being very similar to Example 2.

### Example 10

Example 2 was repeated except that this time the sheared Amioca was replaced by 2.5% sheared Remyrise (waxy rice starch ex Remy) prepared in the same way as the sheared Amioca described in Example 1. After heating, freezing and reheat the dispersion was smooth and without a slimy appearance and texture.

### Example 11

Example 1 was repeated except that this time the Sheared Amioca was replaced by 8% Sheared Wheatstarch, again prepared in the same way as the Sheared Amioca described in Example 1. After heating, freezing and reheat the dispersion was thick, smooth and without a slimy appearance and texture.

### Example 12 and Comparative Examples L & M

Experiments were conducted in a custard mix having the following composition:

| COMPOSITION (wt%) | EXAMPLE | | |
|---|---|---|---|
| | 12 | L | M |
| Cornflour | 3.0 | 3.0 | 3.0 |
| Amioca | - | - | 2.0 |
| 10% Sheared Amioca | 20.0 | - | - |
| Sugar | 6.0 | 6.0 | 6.0 |
| Full Cream Milk Powder | 10.0 | 10.0 | 10.0 |
| Colours | 0.1 | 0.1 | 0.1 |
| Flavourings | 0.1 | 0.1 | 0.1 |
| Water | to 100 | to 100 | to 100 |

10% Sheared Amioca was prepared as in Example 3. The other starches were slurried in part of the water. The other ingredients were mixed in the rest of the water and heated to ca 80°C. In each example the starch slurry was then added and the mix brought to the boil and simmered for one minute; for Example 12 the Sheared Amioca was heated separately to ca 90C and stirred into the mix after simmering until a smooth dispersion was obtained. Each mix was then poured into sachets and cooled, frozen and reheated according to the method described in Example 1.

After reheating, the custard of Example 12 was smooth and had a good texture, typical of the freshly prepared sample.

After reheating, the custard of Example L was lumpy, having retrograded into large starchy lumps surrounded by a milky liquid.

After reheating, the custard of Example M was thick but slimy.

## Claims

1. A starch-thickened foodstuff comprising a gelatinised native starch component and an amylopectin component, wherein the amylopectin component is obtainable by;
(a) cooking the amylopectin component source, in the absence of the native starch component, to obtain a gel;
(b) shearing the cooked amylopectin component source.

2. A starch-thickened foodstuff according to claim 1, wherein the amylopectin component source is a waxy starch.

3. A starch-thickened foodstuff according to claim 1 and 2, wherein the amylopectin component source is selected from waxy cereal starches, waxy root starches, mutant waxy starches and mixtures thereof.

4. A starch-thickened foodstuff according to any preceding claim, wherein the amylopectin component source is selected from waxy maize starch, waxy rice starch, and mixtures thereof.

5. A starch-thickened foodstuff according to any preceding claim, wherein the native starch component is selected from corn or maize starch, tapioca starch, wheat starch, rice starch, pea starch, grain sorghum starch, potato starch and mixtures thereof.

6. A starch-thickened foodstuff according to claim 1, wherein in step (b) the cooked amylopectin component source is homogenised.

7. A starch-thickened foodstuff according to any preceding claim, wherein the foodstuff additionally comprises an emulsifier.

8. A starch-thickened foodstuff according to claim 7, wherein the emulsifier is selected from alkali metal or hydrogen C₁₂-C₂₄ fatty acid acyl lactylates, monoglycerides of, preferably saturated C₁₂-C₂₄ fatty acids, diacetyl tartaric acid esters of mono- and/or di-glycerides of C₁₂-C₂₄ fatty acids, succinylated monoglycerides of C₁₂-C₂₄ fatty acids, and mixtures thereof.

9. A process of preparing starch-thickened foodstuff according to claim 1, comprising;
(c) combining the amylopectin component with the native starch component; and
(d) cooking the mixture thus obtained and cooling it.

10. A process of preparing starch-thickened foodstuff according to claim 1, comprising;
(c) cooking the native starch component; and (d) admixing with the amylopectin component.
Providing that step d, is carried out whilst the native starch component is still warm.

## Patentansprüche

1. Mit Stärke verdicktes Nahrungsmittel, welches eine gelatinierte native Stärke-Komponente und eine Amylopektin-Komponente umfaßt, wobei die Amylopektin-Komponente erhalten werden kann, indem:
(a) die Quelle der Amylopektin-Komponente, in Abwesenheit der nativen Stärke-Komponente, gekocht wird, um ein Gel zu erhalten;
(b) die gekochte Quelle der Amylopektin-Komponente einer Scherkraft ausgesetzt wird.

2. Mit Stärke verdicktes Nahrungsmittel nach Anspruch 1, bei welchem die Quelle der Amylopektin-Komponente eine Wachsstärke ist.

3. Mit Stärke verdicktes Nahrungsmittel nach Anspruch 1 und 2, bei welchem die Quelle der Amylopektin-Komponente ausgewählt ist aus Zerealienwachsstärken, Wurzelwachsstärken, mutanten Wachsstärken und Mischungen hievon.

4. Mit Stärke verdicktes Nahrungsmittel nach einem der vorhergehenden Ansprüche, bei welchem die Quelle der Amylopektin-Komponente ausgewählt ist aus Maiswachsstärke, Reiswachsstärke und Mischungen hievon.

5. Mit Stärke verdicktes Nahrungsmittel nach einem der vorhergehenden Ansprüche, bei welchem die native Stärke-Komponente ausgewählt ist aus Getreide- oder Maisstärke, Tapiokastärke, Weizenstärke, Reisstärke, Erbsenstärke, Sorghumkornstärke, Kartoffelstärke und Mischungen hievon.

6. Mit Stärke verdicktes Nahrungsmittel nach Anspruch 1, wobei in Schritt (b) die gekochte Quelle der Amylopektin-Komponente homogenisiert wird.

7. Mit Stärke verdicktes Nahrungsmittel nach einem der vorhergehenden Ansprüche, wobei das Nahrungsmittel zusätzlich einen Emulgator umfaßt.

8. Mit Stärke verdicktes Nahrungsmittel nach Anspruch 7, bei welchem der Emulgator ausgewählt ist aus Alkalimetall- oder Wasserstoff-C₁₂-C₂₄-Fettsäureacyllactylaten, Monoglyceriden von, vorzugsweise gesättigten, C₁₂-C₂₄-Fettsäuren, Diacetylweinsäureestern von Mono- und/oder Diglyceriden von C₁₂-C₂₄-Fettsäuren, succinylierten Monoglyceriden von C₁₂-C₂₄-Fettsäuren und Mischungen hievon.

9. Verfahren zur Herstellung eines mit Stärke verdickten Nahrungsmittels nach Anspruch 1, welches umfaßt:
(c) Kombinieren der Amylopektin-Komponente mit der nativen Stärke-Komponente; und
(d) Kochen der so erhaltenen Mischung und Abkühlen derselben.

10. Verfahren zur Herstellung eines mit Stärke verdickten Nahrungsmittels nach Anspruch 1, welches umfaßt:
(c) Kochen der nativen Stärke-Komponente; und
(d) Mischen mit der Amylopektin-Komponente;
mit der Maßgabe, daß Schritt (d) durchgeführt wird, während die native Stärke-Komponente noch warm ist.

## Revendications

1. Produit alimentaire épaissi à l'amidon comprenant un composant amidon naturel gélatinisé et un composant amylopectine dans lequel le composant amylopectine peut être obtenu par:
(a) cuisson de la source de composant amylopectine en l'absence du composant amidon naturel, pour obtenir un gel ;
(b) cisaillement de la source de composant amylopectine cuite.

2. Produit alimentaire épaissi à l'amidon selon la revendication 1, dans lequel la source de composant amylopectine est un amidon cireux.

3. Produit alimentaire épaissi à l'amidon selon les revendications 1 et 2, dans lequel la source de composant amylopectine est choisie parmi les amidons de céréales cireux, les amidons de racines cireux, les amidons cireux mutants et leurs mélanges.

4. Produit alimentaire épaissi à l'amidon selon l'une quelconque des revendications précédentes, dans lequel la source de composant amylopectine est choisie parmi l'amidon de maïs cireux, l'amidon de riz cireux et leurs mélanges.

5. Produit alimentaire épaissi à l'amidon selon l'une quelconque des revendications précédentes, dans lequel le composant amidon naturel est choisi parmi l'amidon de blé ou de maïs, l'amidon de tapioca, l'amidon de froment, l'amidon de riz, l'amidon de pois, l'amidon de sorgho, l'amidon de pomme de terre, et leurs mélanges.

6. Produit alimentaire épaissi à l'amidon selon la revendication 1, dans lequel au stade b) la source de composant amylopectine cuite est homogénéisée.

7. Produit alimentaire épaissi à l'amidon selon l'une quelconque des revendications précédentes, dans lequel le produit alimentaire comprend en plus un émulsifiant.

8. Produit alimentaire épaissi à l'amidon selon la revendication 7, dans lequel l'émulsifiant est choisi parmi les acyl-lactylates d'acides gras en C₁₂₋₂₄ de métaux alcalins ou hydrogéno, les monoglycérides des acides gras en C₁₂₋₂₄ de préférence saturés, les esters d'acide diacétyl-tartrique des mono et/ou diglycérides des acides gras en C₁₂₋₂₄, les monoglycérides succinylés des acides gras en C₁₂₋₂₄ et leurs mélanges.

9. Procédé de préparation d'un produit alimentaire épaissi à l'amidon selon la revendication 1, comprenant :
(c) la combinaison du composant amylopectine avec le composant amidon naturel ; et
(d) la cuisson du mélange ainsi obtenu et son refroidissement.

10. Procédé de préparation d'un produit alimentaire épaissi à l'amidon selon la revendication 1, comprenant :
(c) la cuisson du composant amidon naturel ; et
(d) le mélange avec le composant amylopectine;
à la condition que le stade (d) soit effectué alors que le composant amidon naturel est toujours chaud.
